# EUROPEAN PATENT SPECIFICATION

(11) **EP 2 105 630 B1**
(45) Date of publication and mention of the grant of the patent: **19.05.2010**
(21) Application number: 09156336.1
(22) Date of filing: 26.03.2009
(51) Int. Cl.: F16F 9/53

(54) **Damping force variator**
Dämpfungskraftvariator
Variateur d'amortissement

(30) Priority: 26.03.2008 JP 2008079748
(43) Date of publication of application: 30.09.2009
(73) Proprietor: Honda Motor Co., Ltd., Minato-ku Tokyo 107-8556 (JP)
(72) Inventor: Wakamatsu, Goro c/o Honda R & D Co., Ltd., Saitama 351-0193 (JP)
(74) Representative: Trossin, Hans-Jürgen

(56) References cited:
- GB-A- 2 382 638
- US-A1- 2004 124 051
- US-A1- 2006 016 649
- US-A1- 2008 053 763

## Description

### BACKGROUND OF THE INVENTION

### Field of the Invention

The present invention relates to a damping force variator that applies a magnetic field to a magnetic fluid referred to as MRF (Magneto-Rheological Fluid) which flows through an orifice to vary the magnitude of a damping force.

### Description of the Related Art

A damping force variator is used for, for example, a damper to damp a vibration of a vehicle body. As a damping force variator, there is suggested one that applies a magnetic field to MRF which flows through an orifice (gap) to vary the magnitude of a damping force (For example, refer to US Patent No. 6260675).

The MRF, in which minute iron particles are dispersed, has a relatively large specific gravity. Accordingly, an inertia force acting on the MRF is relatively large, and the MRF cannot flow synchronously with a vibration to be damped if the frequency of the vibration is high, which sometimes leads to a case in which the vibration cannot be efficiently damped.

SUMMARY OF THE INVENTION

US 2004/124051 A1 discloses a vehicle suspension damper having a buoyant sleeve (28) floating in a working chamber (14). The buoyant sleeve (28), disposed to slow down the speed of a piston rod (20) at the end portion of a rebound stroke in the working chamber (14), cannot serve as a float (13). The piston rod (20) can merely move but cannot follow vibration having a high frequency since the vibration applied to the piston rod (20) externally does not act on the buoyant sleeve (28) directly.

US 2008/053763 A1 and GB-A-2382638 show MRF dampers without float.

It is therefore an object of the present invention to overcome the above-mentioned drawback by providing a damping force variator that can damp a vibration even if the frequency of the vibration is high.

The present invention provides a damping force variator in accordance with claim 1. The damping force variator is capable of varying a damping force by applying a magnetic field to an MRF, which includes a cylinder in which an orifice is formed and the MRF flows through the orifice, and a float which is disposed in the orifice and moves inside the orifice when the MRF is flowing in the orifice. When the MRF flows in synchronization with a vibration, the flow velocity of the MRF becomes higher in the orifice. The flow velocity depends on the mass of the MRF in the orifice, and the smaller the mass of the MRF is, the higher the flow velocity can become. Accordingly, in the present invention, in order to reduce the mass of the MRF in the orifice, the float whose specific gravity is smaller than that of the NIRF is disposed in the orifice. Since the float moves when the MRF flows, the flow velocity depends on the sum of the mass of the MRF and the mass of the float in the orifice. The sum of the mass of the MRF and the mass of the float in the orifice is smaller than the mass of the MRF in the orifice if the orifice is filled with only the MRF. Accordingly, the flow velocity can be made higher by using the float. If the flow velocity can be made higher, the MRF and float in the orifice can flow and move synchronously with each other even if a vibration is of a high frequency, which can damp the vibration of the high frequency.

The present invention further provides a damping force variator, which further includes a piston that slides in the cylinder to apply a pressure to the MR.F, and the damping force variator is a damper that damps a vibration transmitted from the cylinder or the piston. Since the movement distance along which the float can move at the highest velocity is approximately the length of the orifice at a maximum, so long as the amplitude of a vibration is equal to or less than that which brings about the movement distance of this extent, the vibration can be effectively damped. Specifically, since a road noise etc. which is transmitted to the damper is a vibration of a small amplitude and a high frequency, according to the present invention, the vibration can be effectively damped.

The present invention further provides a damping force variator which is an engine mount that supports an engine, and damps a vibration transmitted from the engine. Since a vibration generated in the engine is a vibration of a small amplitude and a high frequency, according to the present invention, the vibration can be effectively damped. Especially, while the amplitude of a vibration becomes large at the time of the idling, according to the present invention, a vibration can be damped, which can prevent an engine vibration from being transmitted to a vehicle body.

The present invention further provides a damping force variator which is a bush that couples parts of a suspension, and damps a vibration generated when a vehicle is running. Specifically, since a road noise etc. is a vibration of a small amplitude and a high frequency, according to the present invention, the vibration can be effectively damped.

According to the present invention, it is possible to provide a damping force variator that can damp a vibration even if the frequency of the vibration is high.

### BRIEF DESCRIPTION OF THE DRAWINGS

FIG. 1A shows a longitudinal sectional view of a damping force variator according to the first embodiment of the present invention, and FIG.1B shows a sectional view of the damping force variator along the A-A arrow direction shown in FIG. 1A;
FIG.2 shows a graphical representation which represents frequency dependence of a damping force generated in the damping force variator;
FIG. 3 shows a schematic view representing part of a vehicle in which the damping force variator according to the first embodiment of the present invention supports an engine as engine mounts;
FIG. 4 shows a schematic view representing part of the vehicle in which the damping force variator according to the first embodiment of the present invention is used as a damper of a suspension of the vehicle;
FIG. 5 shows a longitudinal sectional view of a modified example of the damping force variator according to the first embodiment of the present invention; and
FIG. 6 shows a sectional view of a damping force variator according to the second embodiment of the present invention.

### DESCRIPTION OF THE PREFERRED EMBODIMENTS

### FIRST EMBODIMENT

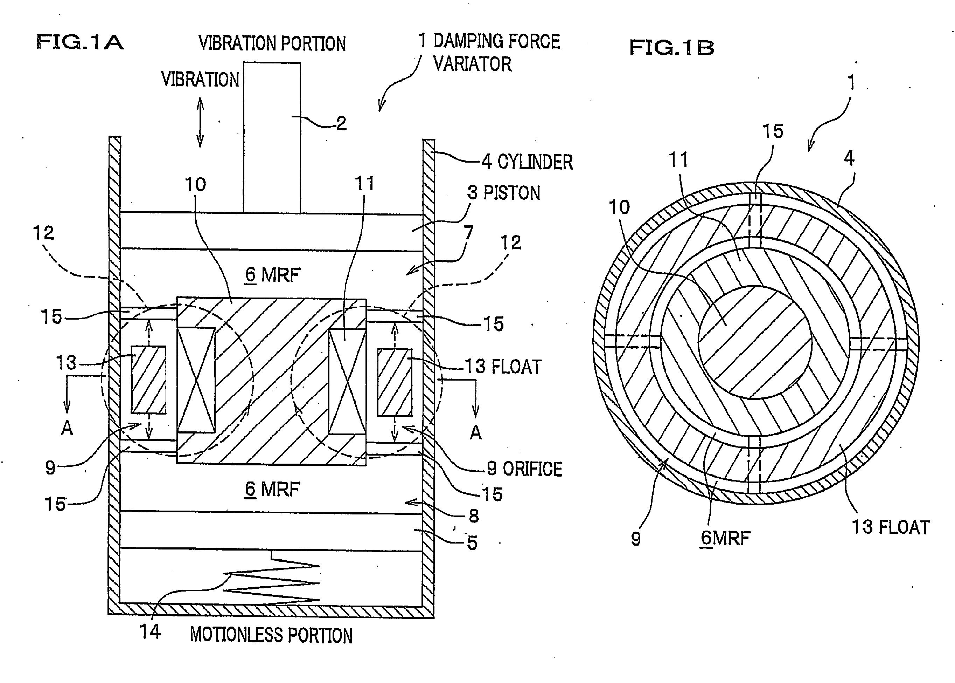

FIG. 1A shows a longitudinal sectional view of a damping force variator 1 according to the first embodiment of the present invention, and FIG. 1B shows a sectional view of the damping force variator 1 along the A-A arrow direction shown in FIG. 1A. The damping force variator 1 is of the mono-tube type (De Carbon type), and comprises a cylinder 4, a piston rod 2, a piston 3, a partition wall 10, and a free piston 5. The cylinder 4 is in the form of a cylinder which is filled with MRF 6. The piston rod 2 transmits a vibration and slides in the center axis direction in the cylinder 4. The piston 3 is secured to the leading end of the piston rod 2 and slides in the center axis direction on the inner surface of the cylinder 4 to apply a pressure to the MRF 6. The partition wall 10 separates the inner space of the cylinder 4 into a first oil room 7 and a second oil room 8. The free piston 5 ' slides in the center axis direction on the inner surface of the cylinder 4, and the volume of the second oil room 8 varies due to the inflow/outflow of the MRF 6.
The free piston 5 is pressed toward the second oil room 8 by a spring 14.

On the side surface of the partition wall 10, an electromagnetic coil 11 is disposed. The side surface of the partition wall 10 and the side surface of the electromagnetic coil 11 are kept away from the inner surface of the opposed cylinder 4. There is a space enclosed by the side surface of the partition wall 10, the side surface of the electromagnetic coin 11, and the inner surface of the cylinder 4, which is an orifice 9. In the orifice 9, a float 13 is disposed. The float 13 is in the form of a circular ring, and capable of moving between stoppers 15 which are disposed above and below the float 13. The stoppers 15 are fixed to the inner surface of the cylinder 4, and support the partition wall 10. As shown in FIG. 1B, the stoppers 15 are so disposed in the orifice 9 as to separate the orifice 9 into four sections at the upper end and lower end of the orifice 9.

The MRF 6 is a fluid formed by oil such as homogeneous mineral oil working as the dispersion medium, and magnetic particles provided with the ferromagnetism which are dispersed in the oil. The magnetic particles are of a perfect spherical shape, and the average particle diameter thereof is approximately several µm. When a magnetic field is not applied to the MRF 6, the MRF 6 is a liquid similar to a general hydraulic fluid and behaves as a Newtonian fluid. On the other hand, when a magnetic field is applied to the MRF 6 from the electromagnetic coil 11, the magnetic particles which are homogeneously dispersed in the MRF 6 link together with one another in the direction of a magnetic force line 12 (magnetic field direction) to form a cluster in the form of a chain. When the cluster is formed in the MRF 6, a large force is needed to make the MRF 6 flow (deform). As a result, the apparent viscosity of the MRF 6 becomes so large that the MRF 6 behaves as a plastic fluid having a yield stress when the MRF 6 is flowing. The variation of the viscosity of the MRF 6 due to a magnetic field is reversible, and the MRF 6 returns to the original Newtonian fluid state immediately after the magnetic field is removed. Furthermore, by adjusting the strength of the magnetic field, since the length of the cluster in the form of a chain changes, the degree of the viscosity can be adjusted.

The magnetic force line 12 shown in FIG. 1A represents a magnetic force line which passes through a region in which the density of the magnetic force line 12 becomes highest. The magnetic force line 12 crosses the space between the partition wall 10 and the cylinder 4 at the upper end and lower end of the orifice 9. By applying a large magnetic field to the MRF 6 from the partition wall 10 to the cylinder 4 at the upper end and lower end of the orifice 9 to enlarge the viscosity of the MRF 6, a large damping force is easily generated.

The float 13 has its movement range restricted by the stoppers 15 so that the float 13 is prevented from moving to the magnetic force line which passes through a region in which the density of the magnetic force line 12 becomes highest. The stoppers 15 are disposed at the upper end and lower end of the orifice 9, and the float 13 can move therebetween. In this way, the float 13 moves in a range where an influence on the magnetic field is small. Accordingly, since the MRF 6 is always disposed on the magnetic force line 12, the viscosity can be enlarged at any time according to need. As the material of the float 13, aluminium (A1), aluminium alloy, resin, ceramics, etc, which are nonmagnetic, smaller in specific gravity as compared with the MRF 6, high in rigidity can be used.

The first oil room 7 and second oil room 8 formed inside the cylinder 4 are filled with the MRF 6. The first oil room 7 communicates with the second oil room 8 through the orifice 9, and the MRF 6 can flow both toward the first oil room 7 and toward the second oil room 8 bidirectionally through the orifice 9. When the piston 3 slides in the cylinder 4 due to the vibration, the volume of the first oil room 7 is varied, and the MRF 6 flows through the orifice 9 to vary the volume of the second oil room 8. The partition wall 10 adjacent to the orifice 9 has the electromagnetic coil 11 installed thereon, and the electromagnetic coil 11 applies a magnetic field to the MRF 6 flowing through the orifice 9 to vary the viscosity of the MRF 6 in order to variably control the damping force of the damping force variator 1. Furthermore, by controlling the magnitude of a magnetic field to be applied to the MRF 6, the magnitude of the damping force can be controlled.

The float 13 moves up and down in the orifice 9 when the MRF 6 flows due to a vibration. While the total mass of the flowing substance in the orifice 9 is the sum of the mass of the MRF 6 and the mass of the float 13 in the orifice 9, this total mass is smaller than the mass of the MRF 6 in the orifice 9 if the orifice 9 is fully filled only with the MRF 6. Accordingly, even if a vibration is of a high frequency, the MRF 6 and float 13 in the orifice 9 can flow synchronously, therefore the vibration of the high frequency can be damped effectively.

The damping force variator 1 can be made to function as a damper which damps the vibration transmitted from the piston 3. When a vibration is generated at wheels while a vehicle is running, as shown in FIG. 1A, the vibration is transmitted to the piston rod 2 to vibrate the piston 3. Then, the MRF 6 flows, and the float 13 vibrates. When the amplitude of the vibration of the float 13 becomes large, the movement range of the float 13 is restricted by the upper and lower stoppers 15, and the amplitude can only become large up to approximately the distance between the stoppers 15 (maximum amplitude).

If the amplitude of a transmitted vibration is so large that the MRF 6 passes through the outside of the float 13 and flows through the orifice 9 after the float 13 is stopped either by the upper or by the lower stoppers 15, the flow path cross section of the orifice 9 is narrowed by the float 13. In this case, the response to a vibration of a high frequency is lowered, while a large damping force can be gained.

Specifically, in order to effectively damp such a vibration as a road noise whose vibration amplitude is relatively small and vibration frequency is relatively high, the orifice 9 and float 13 are designed to have such shapes that the movement range restricted by the stoppers 15 is equal to or less than the maximum amplitude when the float 13 vibrates. In this way, a vibration of a small amplitude and a high frequency such as a road noise can be efficiently damped. Then, if a vibration of a low frequency and a large amplitude is generated due to the irregularity of road surface, by narrowing the orifice 9 using the float 13 to generate a large damping force as described above, a vibration of a large amplitude can be efficiently damped.

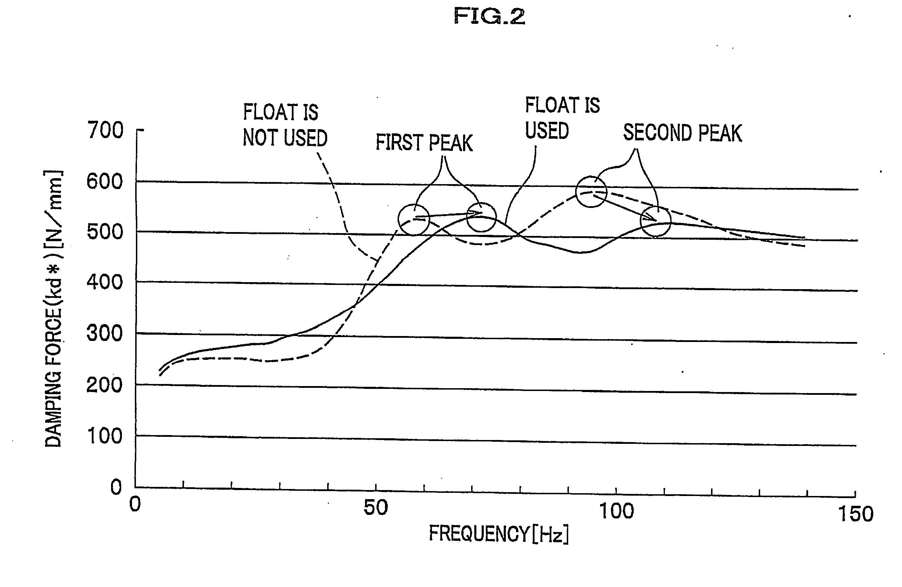

FIG.2 shows a graphical representation which indicates frequency dependence of the damping force generated on the damping force variator 1. In FIG. 2, a line referenced by "TLOAT IS USED" represents a case in which the damping force variator I according to the first embodiment measures a damping force, while a line referenced by "FLOAT IS NOT USED" represents a case in which a damping force variator which does not have the float 13 measures a damping force. Accordingly, it is seen that, by disposing the float 13 in the orifice 9, both the first peak and second peak of the resonance frequency shift to the higher frequencies. The reason is that the mass of the movable part in the orifice 9 can be reduced.

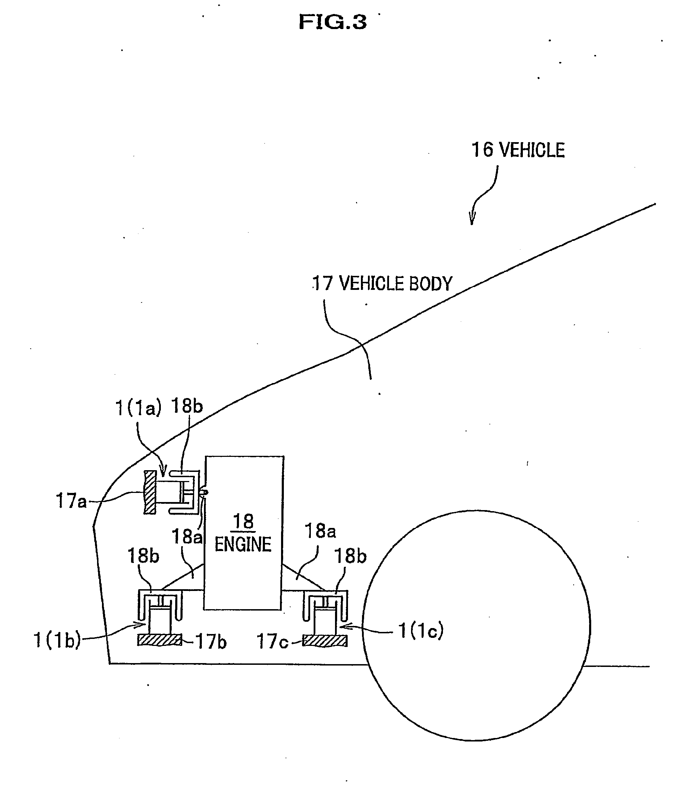

FIG. 3 shows a schematic view representing part of a vehicle 16 in which the damping force variator 1 according to the first embodiment of the present invention supports an engine 18 as engine mounts 1a, 1b, 1c. As the front mount, the engine mount 1b (1) is disposed on a frame 17b of a vehicle body 17 to support the engine 18 from the front side of the engine 18. Furthermore, as the rear mount, the engine mount 1c (1) is disposed on a frame 17c of the vehicle body 17 to support the engine 18 from the rear side of the engine 18. Moreover, as the side mount, the engine mount 1a (1) is disposed on a frame 17a of the vehicle body 17 to support the engine 18 from the upper side of the engine 18. Since the vibration generated in the engine 18 is of a small amplitude and a high frequency, the vibration of the engine 18 can be effectively damped by using the damping force variator 1 as the engine mounts 1a, 1b, 1c. In order to couple the engine 18 and the engine mounts 1a, 1b, 1c, brackets 18a may be used, and slide covers 18b may be used for the dust prevention.

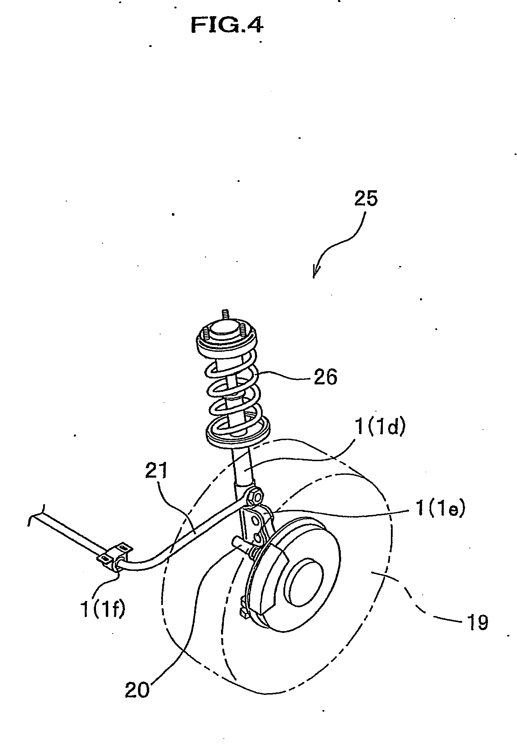

FIG. 4 shows a schematic view representing a part of the vehicle in which the damping force variator 1 according to the first embodiment of the present invention is used as a damper 1d of a suspension 25 of the vehicle. A tire 19 is secured to a knuckle 20, and the damper 1d (1) is coupled to the knuckle 20 through a bush 1e. The lower end of the damper 1d is coupled to a stabilizer 21, while the upper end of the damper 1d is coupled to a damper base (upper portion of wheel house) which is a vehicle body side member, not shown. In parallel with the damper 1d, a spring 26 is disposed. On the stabilizer 21, a bush 1f to be coupled to the vehicle body is disposed. Details of the bush 1e, bush 1f will be explained later. Since a vibration such as a road noise is a vibration of a small amplitude and a high frequency, by using the damping force variator 1 as the damper 1d, a vibration such as a road noise can be effectively damped.

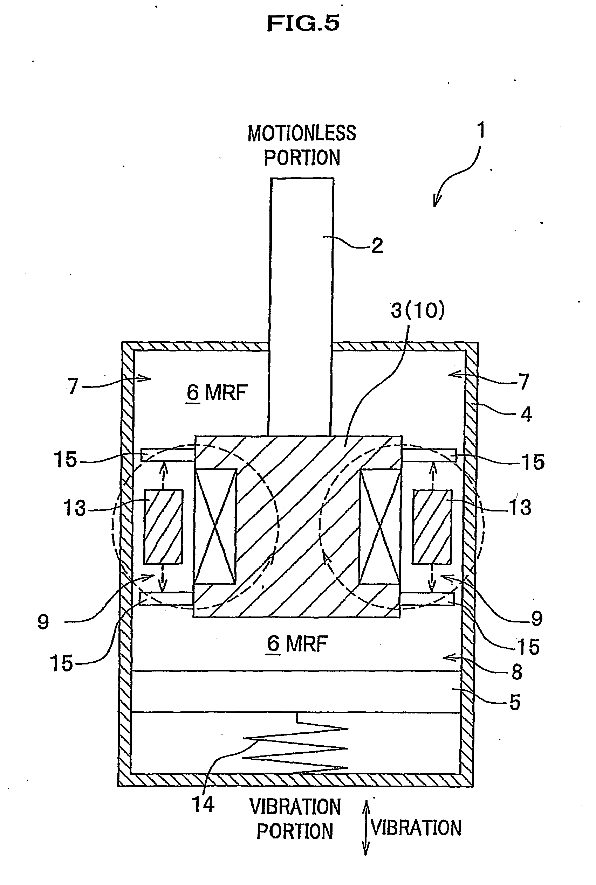

FIG. 5 shows a longitudinal sectional view of a modified example of the damping force variator 1 according to the first embodiment of the present invention. The feature of the modified example which is different from the first embodiment is that the piston 3 and the partition wall 10 are integrally formed. Accordingly, the stoppers 15 are not fixed to the cylinder 4, and keep away therefrom. On the other hand, similar to the first embodiment, the stoppers 15 can restrict the movement range of the float 13 to the space inside the orifice 9.

Since the damping force variator 1 damps a vibration, a vibration portion which vibrates in synchronization with a transmitted vibration and a emotionless portion which has its vibration damped can be considered. In order to make the vibration portion vibrate in synchronization with a vibration of a high frequency, it is advantageous to make the mass of the vibration portion small and light. Accordingly, as indicated in the first embodiment shown in FIG. 1A, if the piston rod 2 and piston 3 are made to work as the vibration portion, the partition wall 10, electromagnetic coil 11, and stoppers 15 are fixed to the cylinder 4 to make the vibration portion light. On the other hand, as indicated in the modified example shown in FIG. 5, if the cylinder 4 is made to work as the vibration portion, the partition wall 10, electromagnetic coil 11, and stoppers 15 are fixed (united) to the piston 3 to make the vibration portion light.

### SECOND EMBODIMENT

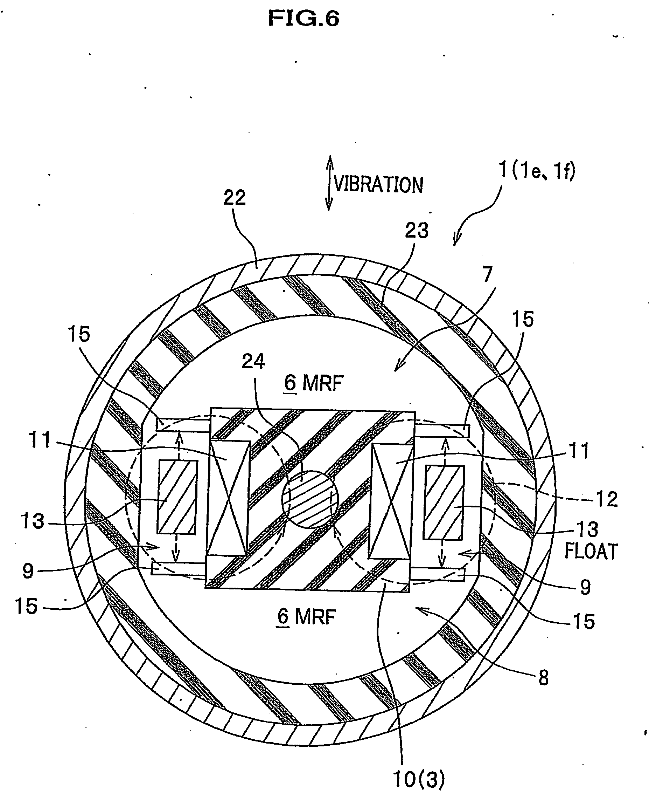

FIG. 6 shows a sectional view of a damping force variator 1 according to the second embodiment of the present invention. The damping force variator 1 can be made to function as the bushes 1e, 1f which couple parts of the suspension 25 shown in FIG. 4, and damp a vibration generated when a vehicle is running.

The feature of the second embodiment which is different from the first embodiment is that, instead of the piston 3 and cylinder 4, an external cylinder 22 and an axis 24 are disposed. In the same case as the piston 3 and cylinder 4 vibrate with respect to each other to damp a vibration, the external cylinder 22 and axis 24 vibrate with respect to each other to damp a vibration. Accordingly, the damping force variator 1 according to the second embodiment also has the partition wall 10, electromagnetic coil 11, stoppers 15, float 13, first oil room 7, second oil room 8, and orifice 9, and those components function similar to those of the first embodiment. The damping force variator 1 according to the second embodiment has an elastic vibration-isolating external wall 23 disposed on the inner surface of the external cylinder 22 to further strengthen the performance of vibration isolation. The stoppers 15 have a comb teeth shape and do not prevent the MRF 6 from flowing, and are provided with the elasticity so that the stoppers 15 bend when hitting against the elastic vibration-isolating external wall 23. While a vibration such as a road noise is transmitted to the bushes 1e, 1f, since the road noise is a vibration of a small amplitude and a high frequency, the vibration can be effectively damped according to the damping force variator 1 of the second embodiment.

While the invention has been described in accordance with certain preferred embodiments thereof illustrated in the accompanying drawings and described in the above description in detail, it should be understood by those ordinarily skilled in the art that the invention is not limited to the embodiments, but various modifications, alternative constructions or equivalents can be implemented without departing from the scope and spirit of the present invention as set forth and defined by the appended claims.

The present invention provides a damping force variator that can damp a vibration even if the frequency of the vibration is high. The damping force variator, which applies a magnetic field to a magnetic fluid flowing through an orifice to vary the magnitude of a damping force, has a float that moves in the orifice when the magnetic fluid flows. If the damping force variator has a cylinder that is filled with the magnetic fluid, and a piston that slides in the cylinder to apply a pressure to the magnetic fluid, the damping force variator functions as a damper that damps a vibration transmitted from the cylinder or the piston.

## Claims

1. A damping force variator (1) comprising:
a cylinder (4);
an MRF (6) filled in-the cylinder (4), **characterized in that** the damping force variator (1) further comprises
a partition wall (10) disposed in the cylinder (4) and defining a first oil room (7) in one end of the cylinder (4) and a second oil room (8) in the other end of the cylinder (4);
an electromagnetic coil (11) wound around the partition wall (10) and applying a magnetic field to the MRF (6) for varying a damping force;
an orifice (9) formed between an inner surface of the cylinder (4) and the partition wall (10) in the cylinder, the MRF (6) flowing freely between the first oil room (7) and the second oil room (8) through the orifice (9); and
a float (13) disposed in the orifice (9) and moving inside the orifice (9) when the MRF (6) upon receiving a vibration applied externally flows in the orifice (9).

2. The damping force variator (1) according to claim 1, further comprising:
a piston (3) sliding in the cylinder (4);
the damping force variator (1) being a damper (1d) that damps the vibration transmitted from the cylinder (4) or the piston (3).

3. The damping force variator (1) according to claim 1, further comprising stoppers (15) disposed in the orifice (9) and supported by the inner surface or an outer surface of the cylinder (4), each stopper (15) having an upper stopper portion and a lower stopper portion, between which the float (13) is located, for limiting movement of the float (13).

4. The damping force variator (1) according to claim 1 or 3, wherein
the damping force variator (1) is a damper (1 d) that damps the vibration transmitted from the cylinder (4) or the piston (3),
the float (13) is prevented from moving to the magnetic force line which passes through a region in which the density of a magnetic force line (12) becomes highest, and
the stoppers (15) are disposed at the upper end and lower end of the orifice (9), and the float (13) can move therebetween.

5. The damping force variator (1) according to one of claims 1, 3 or 4, wherein the float (13) has a lower mass than a mass of the MRF (6) in the orifice.

6. The damping force variator (1) according to one of claims 1, 3, 4 and 5, the damping force variator (1) being an engine mount (1a, 1b, 1c) that supports an engine (18), and damps a vibration transmitted from the engine (18).

7. The damping force variator (1) according to one of claims 1, 3, 4, 5 and 6, the damping force variator (1) being a bush (1e, 1f) that couples parts of suspension, and damps a vibration generated when a vehicle is running.

## Patentansprüche

1. Dämpfungskraftvariator (1), umfassend:
einen Zylinder (4);
eine MRF (6), die in den Zylinder (4) gefüllt ist, **dadurch gekennzeichnet, dass** der Dämpfungskraftvariator (1) ferner umfasst:
eine Trennwand (10), die in dem Zylinder (4) angeordnet ist und eine erste Ölkammer (7) in einem Ende des Zylinders (4) und eine zweite Ölkammer (8) in dem anderen Ende des Zylinders (4) definiert;
eine elektromagnetische Wicklung (11), die um die Trennwand (10) herumgewickelt ist und an die MRF (6) ein Magnetfeld anlegt, um eine Dämpfungskraft zu verändern;
eine Öffnung (9), die zwischen einer Innenoberfläche des Zylinders (4) und der Trennwand (10) in dem Zylinder ausgebildet ist, wobei die MRF (6) frei zwischen der ersten Ölkammer (7) und der zweiten Ölkammer (8) durch die Öffnung (9) fließt; und
einen Schwimmer (13), der in der Öffnung (9) angeordnet und sich innerhalb der Öffnung (9) bewegt, wenn die MRF (6), bei Erhalt einer von außen einwirkenden Vibration, in der Öffnung (9) fließt.

2. Der Dämpfungskraftvariator (1) gemäß Anspruch 1, ferner umfassend:
einen Kolben (3), der in dem Zylinder (4) gleitet;
wobei der Dämpfungskraftvariator (1) ein Dämpfer (1d) ist, der die von dem Zylinder (4) oder dem Kolben (3) übertragene Vibration dämpft.

3. Der Dämpfungskraftvariator (1) gemäß Anspruch 1, der ferner Stopper (15) aufweist, die in der Öffnung (9) angeordnet sind und an der Innenoberfläche oder Außenoberfläche des Zylinders (4) getragen sind,
wobei jeder Stopper (15) einen oberen Stopperabschnitt und einen unteren Stopperabschnitt aufweist, zwischen denen der Schwimmer (13) angeordnet ist, um die Bewegung des Schwimmers (13) zu begrenzen.

4. Der Dämpfungskraftvariator (1) gemäß Anspruch 1 oder 3, worin der Dämpfungskraftvariator (1) ein Dämpfer (1d) ist, der die von dem Zylinder (4) oder dem Kolben (3) übertragene Vibration dämpft,
wobei der Schwimmer (13) an einer Bewegung zu der Magnetkraftlinie hin gehindert wird, die durch einen Bereich hindurch läuft, in der die Dichte einer Magnetkraftlinie (12) am höchsten wird, und
die Stopper (15) an dem oberen Ende und unteren Ende der Öffnung (9) angeordnet sind und sich der Schwimmer (13) dazwischen bewegen kann.

5. Der Dämpfungskraftvariator (1) gemäß einem der Ansprüche 1, 3 oder 4, worin der Schwimmer (13) eine geringere Masse hat als eine Masse der MRF (6) in der Öffnung.

6. Der Dämpfungskraftvariator (1) gemäß einem der Ansprüche 1, 3, 4 und 5,
wobei der Dämpfungskraftvariator (1) ein Motorlager (1a, 1b, 1c) ist, das einen Motor (8) trägt und eine von dem Motor (18) übertragene Vibration dämpft.

7. Der Dämpfungskraftvariator (1) gemäß einem der Ansprüche 1, 3, 4, 5 und 6, worin der Dämpfungskraftvariator (1) eine Buchse (1e, 1f) ist, die Teile einer Aufhängung koppelt und eine Vibration dämpft, die erzeugt wird, wenn ein Fahrzeug fährt.

## Revendications

1. Variateur de force d'amortissement (1) comprenant :
un cylindre (4) ;
un MRF (6) déversé dans le cylindre (4),
**caractérisé en ce que** le variateur de force d'amortissement (1) comprend en outre :
une paroi de séparation (10) disposée dans le cylindre (4) et définissant une première chambre d'huile (7) dans une extrémité du cylindre (4) et une seconde chambre d'huile (8) dans l'autre extrémité du cylindre (4) ;
une bobine électromagnétique (11) enroulée autour de la paroi de séparation (10) et appliquant un champ magnétique sur le MRF (6) pour modifier une force d'amortissement ;
un orifice (9) formé entre une surface interne du cylindre (4) et la paroi de séparation (10) dans le cylindre, le MRF (6) s'écoulant librement entre la première chambre d'huile (7) et la seconde chambre d'huile (8) par l'orifice (9) ; et
un flotteur (13) disposé dans l'orifice (9) et se déplaçant à l'intérieur de l'orifice (9) lorsque le MRF (6) après avoir reçu une vibration appliquée extérieurement, s'écoule dans l'orifice (9).

2. Variateur de force d'amortissement (1) selon la revendication 1, comprenant en outre :
un piston (3) coulissant dans le cylindre (4) ;
le variateur de force d'amortissement (1) qui est un amortisseur (1d) qui amortit la vibration transmise à partir du cylindre (4) ou du piston (3).

3. Variateur de force d'amortissement (1) selon la revendication 1, comprenant en outre des butées (15) disposées dans l'orifice (9) et supportées par la surface interne ou une surface externe du cylindre (4), chaque butée (15) ayant une partie de butée supérieure et une partie de butée inférieure, entre lesquelles le flotteur (13) est positionné, pour limiter le mouvement du flotteur (13).

4. Variateur de force d'amortissement (1) selon la revendication 1 ou 3, dans lequel
le variateur de force d'amortissement (1) est un amortisseur (1d) qui amortit la vibration transmise à partir du cylindre (4) ou du piston (3),
on empêche le flotteur (13) de se déplacer vers la ligne de force magnétique qui passe par une région dans laquelle la densité d'une ligne de force magnétique (12) devient la plus importante, et
les butées (15) sont disposées au niveau de l'extrémité supérieure et de l'extrémité inférieure de l'orifice (9), et le flotteur (13) peut se déplacer entre elles.

5. Variateur de force d'amortissement (1) selon l'une quelconque des revendications 1, 3 ou 4, dans lequel le flotteur (13) a une masse inférieure à une masse du MRF (6) dans l'orifice.

6. Variateur de force d'amortissement (1) selon l'une quelconque des revendications 1, 3, 4 et 5, le variateur de force d'amortissement (1) étant un dispositif de montage de moteur (1a, 1b, 1c) qui supporte un moteur (18), et amortit une vibration transmise à partir du moteur (18).

7. Variateur de force d'amortissement (1) selon l'une quelconque des revendications 1, 3, 4, 5 et 6, le variateur de force d'amortissement (1) étant un balai (1e, 1f) qui couple des parties de suspension, et amortit une vibration générée lorsqu'un véhicule roule.
